# EUROPÄISCHE PATENTSCHRIFT

(11) **EP 2 704 522 B1**
(45) Veröffentlichungstag und Bekanntmachung des Hinweises auf die Patenterteilung: **28.02.2018**
(21) Anmeldenummer: 13180555.8
(22) Anmeldetag: 15.08.2013
(51) Int. Cl.: H05B 6/06, F24C 7/08, G01J 5/00

(54) **Hausgerätevorrichtung**
Domestic appliance
Dispositif d'appareil ménager

(30) Priorität: 03.09.2012 ES 201231358
(43) Veröffentlichungstag der Anmeldung: 05.03.2014
(73) Patentinhaber: BSH Hausgeräte GmbH, 81739 München (DE)
(72) Erfinder: Alonso Esteban, Rafael, 22004 Huesca (ES); Heras Vila, Carlos, 50002 Zaragoza (ES); Imaz Martinez, Eduardo, 50018 Zaragoza (ES); Llorente Gil, Sergio, 50009 Zaragoza (ES); Paesa García, David, 50015 Zaragoza (ES); Rivera Peman, Julio, 50410 Cuarte de Huerva (Zaragoza) (ES); Salinas Ariz, Iñigo, 50009 Zaragoza (ES); Villuendas Yuste, Francisco, 50009 Zaragoza (ES)

(56) Entgegenhaltungen:
- JP-A- 2003 317 920
- JP-A- 2006 294 286
- JP-A- 2009 252 633
- JP-A- 2011 138 734

## Beschreibung

Die Erfindung geht aus von einer Hausgerätevorrichtung nach dem Oberbegriff des Anspruchs 1.

Es sind Kochfelder bekannt, die einen Infrarotsensor aufweisen, der zu einer Temperaturbestimmung vorgesehen ist, und der über eine Lichtleitfaser mit Licht von einem Messpunkt versorgt wird. Ein gattungsgemäßer Kochfeld ist beispielsweise aus der JP 2006 294286 A bekannt. Die Aufgabe der Erfindung besteht insbesondere darin, eine gattungsgemäße Vorrichtung mit verbesserten Eigenschaften hinsichtlich einer kompakten Bauweise bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Hausgerätevorrichtung, insbesondere einer Kochfeldvorrichtung, mit zumindest einer Sensoreinheit, die zumindest ein Lichtsensormodul und zumindest eine Lichtführungseinheit aufweist, die zumindest eine Lichtleitfaser aufweist und die dazu vorgesehen ist, Licht von einem Messpunkt zu dem Lichtsensormodul zu führen.

Es wird vorgeschlagen, dass die Lichtführungseinheit zumindest ein Lichtreflexionselement aufweist. Unter einer "Sensoreinheit" soll insbesondere eine Einheit verstanden werden, die zumindest ein Sensorelement und/oder zumindest ein Sensormodul aufweist. Unter einem "Sensorelement" soll insbesondere ein, vorzugsweise elektronisches, Element verstanden werden, das dazu vorgesehen ist, eine physikalische Größe, insbesondere eine Temperatur und/oder eine elektromagnetische Strahlung, in eine auswertbare, vorzugsweise elektrische, Kenngröße, insbesondere einen Wiederstand, eine Stromstärke, eine Spannung, eine Induktivität und/oder Vergleichbares, umzuwandeln. Unter einem "Sensormodul" soll insbesondere ein Modul verstanden werden, das zumindest ein Sensorelement aufweist. Insbesondere sind die Sensorelemente eines Sensormoduls dazu vorgesehen, eine einzelne Eingangsgröße, insbesondere einen Lichtstrahl, zu analysieren. Insbesondere sind die Sensorelemente eines Sensormoduls dazu vorgesehen, gemeinsam zur Bestimmung einer einzelnen Größe, insbesondere einer Temperatur, eingesetzt zu werden. Insbesondere weist die Sensoreinheit zumindest eine Elektronik, insbesondere zumindest eine Verstärkereinheit, zur Verstärkung von elektrischen Signalen, und/oder zumindest eine Auswerteelektronik, auf. Unter einem "Lichtsensormodul" soll insbesondere ein Sensormodul verstanden werden, das zumindest einen Lichtsensor aufweist. Insbesondere weist das Lichtsensormodul zumindest zwei Lichtsensoren und zumindest einen Strahlteiler auf, der dazu vorgesehen ist, einen Eingangsstrahl in zumindest zwei Teilstrahlen aufzuteilen, die unterschiedlichen der Lichtsensoren zugeführt werden. Vorteilhaft weist das Lichtsensormodul zumindest ein Filterelement auf, das dazu vorgesehen ist, ein Spektrum eines auf den zumindest einen Lichtsensor einfallenden Lichts zu filtern. Insbesondere ist das Filterelement als Hochpassfilter ausgebildet und ist dazu vorgesehen, Licht zu absorbieren, dessen Wellenlänge unter einem bestimmten Grenzwert, insbesondere 1,2 µm, liegt. Unter einem "Lichtsensor" soll insbesondere ein Sensorelement verstanden werden, das dazu vorgesehen ist, eine elektromagnetische Strahlung, insbesondere zumindest im infraroten Spektralbereich, insbesondere zumindest im Bereich zwischen 1 µm und 5 µm, vorteilhaft zwischen 1,2 µm und 3 µm, vorzugsweise zwischen 1,7 µm und 2,6 µm, zu detektieren und insbesondere in zumindest ein elektrisches Signal umzuwandeln.

Unter einer "Lichtführungseinheit" soll insbesondere eine Einheit verstanden werden, die dazu vorgesehen ist, Licht, insbesondere zumindest im infraroten Spektralbereich, von einem ersten Punkt zu einem zweiten Punkt zu leiten. Insbesondere sind der erste und der zweite Punkt zumindest 5 cm, vorteilhaft zumindest 10 cm, vorzugsweise zumindest 15 cm, voneinander entfernt. Insbesondere ist die Lichtführungseinheit dazu vorgesehen, eine Ausbreitungsrichtung des Lichts anzupassen. Insbesondere ist an zumindest einer Stelle der Lichtführungseinheit eine Ausbreitungsrichtung des Lichts, relativ zu einer Eintrittsrichtung, um zumindest 10°, vorteilhaft zumindest 30°, vorzugsweise zumindest 80°, gedreht. Insbesondere weist die Lichtführungseinheit zumindest ein reflektierendes und/oder fokussierendes Element, insbesondere einen Spiegel, ein Prisma und/oder eine Linse, auf. Vorzugsweise ist die Lichtführungseinheit dazu vorgesehen, Licht von dem Messpunkt aufzufangen und weiterzuleiten. Unter einem "Messpunkt" soll insbesondere ein Bereich der Messoberfläche verstanden werden, der insbesondere eine Fläche von zumindest 0,05 mm², vorteilhaft zumindest 0,2 mm², vorzugsweise zumindest 0,75 mm², aufweist. Insbesondere ist die Messoberfläche dazu vorgesehen, Licht, insbesondere zumindest im infraroten Spektralbereich, zumindest an dem Messpunkt zumindest teilweise, insbesondere zumindest im Bereich zwischen 1,2 µm und 2,6 µm, insbesondere zu zumindest 30 %, insbesondere zumindest 50 %, vorteilhaft zumindest 80 %, zu transmittieren. Insbesondere ist der Messpunkt an einer Messoberfläche angeordnet, die von einer Heizzonenbegrenzungseinheit, insbesondere einer Platteneinheit, gebildet wird. Unter einer "Heizzonenbegrenzungseinheit" soll insbesondere eine Einheit verstanden werden, die dazu vorgesehen ist, eine Heizzone, insbesondere einen Garraum, beispielsweise eines Backofens oder einer Mikrowelle, und/oder eine Kochzone, zumindest teilweise zu begrenzen. Insbesondere ist die Sensoreinheit dazu vorgesehen, Licht zu detektieren, das durch die Heizzonenbegrenzungseinheit transmittiert wird. Insbesondere ist die Sensoreinheit dazu vorgesehen, eine Temperatur eines in der Heizzone angeordneten Gargeschirrs und/oder in der Heizzone angeordneten Garguts zu bestimmen. Unter "vorgesehen" soll insbesondere speziell programmiert, ausgelegt und/oder ausgestattet verstanden werden.

Unter einer "Lichtleitfaser" soll insbesondere ein Lichtleitelement verstanden werden, das als Faser ausgebildet ist und dazu vorgesehen ist, auf Basis von Totalreflexion einen seitlichen Lichteinschluss zu erreichen. Unter einer "Faser" soll insbesondere ein, vorzugsweise flexibles, Element verstanden werden, das eine Dicke aufweist, die maximal 20 %, insbesondere maximal 10 %, vorteilhaft maximal 5 %, vorzugsweise maximal 1 %, einer Länge des Elements entspricht. Vorzugsweise weist die Faser einen zumindest ovalen, vorzugsweise kreisrunden, Querschnitt auf. Insbesondere weist die Glasfaser einen kleinsten Biegeradius von maximal 5 cm, insbesondere maximal 4 cm, vorteilhaft maximal 3 cm, auf. Insbesondere ist die Lichtleitfaser von Glas gebildet. Vorzugsweise weist die Lichtleitfaser im Zentrum einen größeren Brechungsindex auf, als in zumindest einem Randbereich. Insbesondere unterliegt der Brechungsindex, ausgehend vom Zentrum zum Rand hin, einem abfallenden Gradienten. Insbesondere weist die Lichtleitfaser eine Kernfaser mit einem Durchmesser von zumindest 200 µm, insbesondere zumindest 300 µm, vorteilhaft zumindest 500 µm, auf. Insbesondere weist die Lichtleitfaser eine numerische Apertur von zumindest 0,1, vorteilhaft zumindest 0,2, und insbesondere von maximal 0,5, vorteilhaft von maximal 0,3, auf. Unter einem "Lichtreflexionselement" soll insbesondere ein Element verstanden werden, das dazu vorgesehen ist, eine Ausbreitungsrichtung von Licht innerhalb einer Wegstrecke von maximal 1 mm, insbesondere maximal 0,5 mm, um zumindest 5°, vorzugsweise zumindest 10°, vorteilhaft zumindest 30°, vorzugsweise zumindest 60°, und insbesondere maximal 170°, vorteilhaft maximal 150°, vorzugsweise maximal 120°, zu verändern. Insbesondere ist das Lichtreflexionselement dazu vorgesehen, aus einem eingehenden Lichtstrahl, der vorzugsweise von dem Messpunkt stammt, zumindest einen reflektierten Lichtstrahl zu erzeugen, wobei der eingehende Lichtstrahl an zumindest einer Grenzfläche zweier Medien zumindest teilweise reflektiert wird und den reflektierten Lichtstrahl bildet. Insbesondere ist das Lichtreflexionselement zumindest dazu vorgesehen, Licht im infraroten Spektralbereich, insbesondere zumindest im Bereich zwischen 1 µm und 2,6 µm, insbesondere zu zumindest 30 %, vorteilhaft zu zumindest 60 %, vorzugsweise zu zumindest 90 %, zu reflektieren.

Durch die erfindungsgemäße Ausgestaltung kann insbesondere eine platzsparende Ausgestaltung erreicht werden, da Bauraum gespart werden kann, der aufgrund von Mindestbiegeradien für die Lichtleitfaser bereitgehalten werden müsste. Insbesondere kann eine geringe Bauhöhe erreicht werden.

Weiterhin wird vorgeschlagen, dass das Lichtreflexionselement zumindest eine Metallbeschichtung aufweist und/oder von einem Metall, insbesondere einem Metallblech, gebildet ist. Insbesondere ist die Metallbeschichtung auf einem zumindest glasartigen Element angeordnet, wodurch eine besonders glatte Metallbeschichtung möglich wird. Insbesondere ist die Metallbeschichtung von Gold, Silber, Aluminium und/oder einem anderen geeigneten Metall gebildet. Insbesondere ist das Lichtreflexionselement dazu vorgesehen, eintretendes Licht an einer Luft-Metall-Grenzschicht zu reflektieren. Alternativ ist es denkbar, dass die Metallbeschichtung an einer Rückseite eines Glaselements angeordnet ist, so dass das Lichtreflexionselement dazu vorgesehen ist, eintretendes Licht an einer Glas-Metall-Grenzschicht zu reflektieren. Es kann insbesondere eine hohe Reflexivität erreicht werden. Insbesondere kann eine hohe Lichtintensität im Lichtsensormodul erreicht werden.

Ferner wird vorgeschlagen, dass das Lichtreflexionselement als Totalreflexionselement ausgebildet ist. Unter einem "Totalreflexionselement" soll insbesondere ein Lichtreflexionselement verstanden werden, das dazu vorgesehen ist, Licht mittels Totalreflexion zu reflektieren. Insbesondere ist das Totalreflexionselement als Prisma, insbesondere als Glasprisma, vorteilhaft als Borosilikatprisma, ausgebildet. Es kann insbesondere ein einfacher Aufbau erreicht werden.

Weiterhin wird vorgeschlagen, dass zumindest eine Lichtleitfaser optisch zwischen dem Lichtreflexionselement und dem Lichtsensormodul angeordnet ist. Insbesondere ist die Lichtleitfaser dazu vorgesehen, von dem Lichtreflexionselement reflektiertes Licht aufzufangen und an das Lichtsensormodul zuzuführen. Es kann insbesondere ein verlustarmer Transport des Lichts erreicht werden. Insbesondere kann ein Einfluss von Streulicht minimiert werden.

Ferner wird vorgeschlagen, dass die Lichtführungseinheit zumindest ein Lichtleitelement aufweist, das optisch zwischen dem Messpunkt und dem Lichtreflexionselement angeordnet ist. Insbesondere ist das Lichtleitelement als Lichtleitfaser ausgebildet. Insbesondere kann eine Messgenauigkeit erhöht werden. Insbesondere kann ein Streulichteinfluss verringert und/oder vermieden werden. Insbesondere kann ein verlustarmer Lichttransport erreicht werden.

Weiterhin wird vorgeschlagen, dass das Lichtreflexionselement und die Lichtleitfaser einstückig ausgebildet sind. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Insbesondere ist es denkbar, dass ein Ende der Lichtleitfaser durch geeigneten Anschliff als Totalreflexionselement ausgebildet ist. Es kann insbesondere eine bauteilarme Ausgestaltung erreicht werden, was eine Montage vereinfacht und/oder vergünstigt.

Ferner wird vorgeschlagen, dass die Lichtführungseinheit zumindest ein Fokussierelement aufweist. Unter einem "Fokussierelement" soll insbesondere ein Element verstanden werden, das dazu vorgesehen ist, zumindest Licht im infraroten Spektralbereich, insbesondere zumindest im Wellenlängenbereich zwischen 1,2 µm und 2,6 µm, zu fokussieren. Insbesondere weist das Fokussierelement eine Brennweite von zumindest 1 cm, insbesondere von zumindest 2 cm, vorteilhaft von zumindest 4 cm, auf.

Insbesondere weist das Fokussierelement eine Brennweite von maximal 10 cm, insbesondere von maximal 6 cm, vorteilhaft von maximal 4 cm, auf. Insbesondere ist das Fokussierelement als Linse ausgebildet. Insbesondere ist das Lichtreflexionselement als Fokussierelement, insbesondere als Hohlspiegel, ausgebildet. Es kann insbesondere ein Streulichteinfluss verringert und/oder vermieden werden. Es kann insbesondere auf zusätzliche Lichtleitelemente, insbesondere Lichtleitfasern, verzichtet werden.

Weiterhin wird vorgeschlagen, dass das Fokussierelement optisch zwischen dem Messpunkt und dem Lichtreflexionselement angeordnet ist. Es kann insbesondere auf ein zusätzliches Lichtleitelement zwischen dem Messpunkt und dem Lichtreflexionselement verzichtet werden. Insbesondere ist die Lichtführungseinheit dazu vorgesehen, ein optisches System zu bilden, das den Messpunkt auf den Lichtsensor abbildet. Es kann insbesondere eine einfache Konstruktion erreicht werden. Insbesondere kann eine bauliche Trennung zwischen einem Heizelement, das dazu vorgesehen ist, eine dem Messpunkt zugeordnete Heizzone zu beheizen, und der Sensoreinheit erreicht werden, wobei insbesondere auf eine Durchführung eines Lichtleitelements durch das Heizelement verzichtet werden kann.

Bevorzugt wird die Erfindung in Gargeräten, insbesondere Herden und/oder Kochfeldern, eingesetzt. Aber auch in anderen Hausgeräten, in denen eine berührungslose Temperaturbestimmung angestrebt wird, ist diese Erfindung vorteilhaft einsetzbar. Weitere Vorteile ergeben sich aus der folgenden Zeichnungsbeschreibung. In der Zeichnung sind Ausführungsbeispiele der Erfindung.

Es zeigen:
- Fig. 1: ein erfindungsgemäßes Kochfeld in einer schematischen Ansicht von oben,
- Fig. 2: eine erfindungsgemäße Kochfeldvorrichtung in einer schematischen Schnittdarstellung entlang der Linie II-II in Fig. 1,
- Fig. 3: eine alternative erfindungsgemäße Kochfeldvorrichtung in schematischer Schnittdarstellung analog Fig. 2 und
- Fig. 4: eine weitere alternative erfindungsgemäße Kochfeldvorrichtung in schematischer Schnittdarstellung analog Fig. 2.

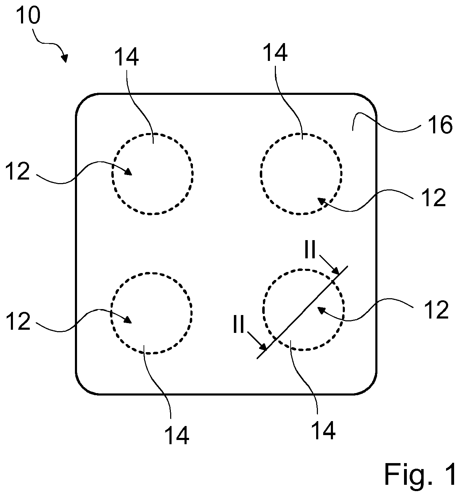

Figur 1 zeigt ein als Kochfeld ausgebildetes Hausgerät 10 mit vier, jeweils als Kochfeldvorrichtung, ausgebildeten Hausgerätevorrichtungen 12. Das Hausgerät 10 ist als Induktionskochfeld ausgebildet. Die Hausgerätevorrichtungen 12 weisen jeweils ein Heizelement 14 auf, das unter einer Heizzonenbegrenzungseinheit 16 angeordnet ist. Die Heizelemente 14 sind als Induktionsheizelemente ausgebildet. Die Heizzonenbegrenzungseinheit 16 ist als eine von Glaskeramik gebildete Kochfeldplatte ausgebildet.

Die Hausgerätevorrichtungen 12 weisen jeweils eine Sensoreinheit 20 mit einem Lichtsensormodul 22 und einer Lichtführungseinheit 24 auf. Die Lichtführungseinheit 24 weist eine erste Lichtleitfaser 26 auf. Die Lichtleitfaser 26 ist als Glasfaser ausgebildet. Die Lichtführungseinheit 24 ist dazu vorgesehen, Licht von einem Messpunkt 30 zu dem Lichtsensormodul 22 zu führen. Das Lichtsensormodul 22 weist einen als Infrarotphotodiode ausgebildeten Lichtsensor auf. Die Lichtführungseinheit 24 weist weiterhin ein Lichtreflexionselement 32 auf. Die erste Lichtleitfaser 26 ist optisch zwischen dem Lichtreflexionselement 32 und dem Lichtsensormodul 22 angeordnet. Die erste Lichtleitfaser 26 verläuft im Wesentlichen parallel zu der Heizzonenbegrenzungseinheit 16. Das Lichtreflexionselement 32 ist dazu vorgesehen, Licht in einem Winkel von 90° zu reflektieren. Das Lichtreflexionselement 32 weist eine von Aluminium gebildete Metallbeschichtung auf, die auf einen planen Glasträger aufgebracht ist. Das Lichtreflexionselement 32 ist dazu vorgesehen, von dem Messpunkt 30, senkrecht von der Heizzonenbegrenzungseinheit 16 weg, nach unten ausgesandtes Licht in eine Richtung parallel zur Heizzonenbegrenzungseinheit 16 umzulenken. Weiterhin weist die Lichtführungseinheit 24 ein weiteres, als Lichtleitfaser ausgebildetes, Lichtleitelement 40 auf, das optisch zwischen dem Messpunkt 30 und dem Lichtreflexionselement 32 angeordnet ist. Das Lichtleitelement 40 ist in einer Ausnehmung 34 des Heizelements 14 angeordnet und reicht von der Heizzonenbegrenzungseinheit 16 bis zu dem Lichtreflexionselement 32. Die Ausnehmung 34 ist nahe einem Zentrum des Heizelements 14 angeordnet. Das Lichtreflexionselement 32 ist dazu vorgesehen, Licht, das durch das Lichtleitelement 40 vom Messpunkt 30 zum Lichtreflexionselement 32 geleitet wird, in die Lichtleitfaser 26 hinein zu reflektieren. Die Lichtleitfaser 26 weist einen Kerndurchmesser von 1 mm und eine numerische Apertur von 0,22 auf. Die Sensoreinheit 20 ist dazu vorgesehen, eine Temperatur von einem auf der Heizzonenbegrenzungseinheit 16 aufgestellten Gargeschirr 38 zu bestimmen. Die Lichtleitfaser 26 verläuft ohne Biegung, die von der Heizzonenbegrenzungseinheit 16 weg oder zu ihr hinführt.

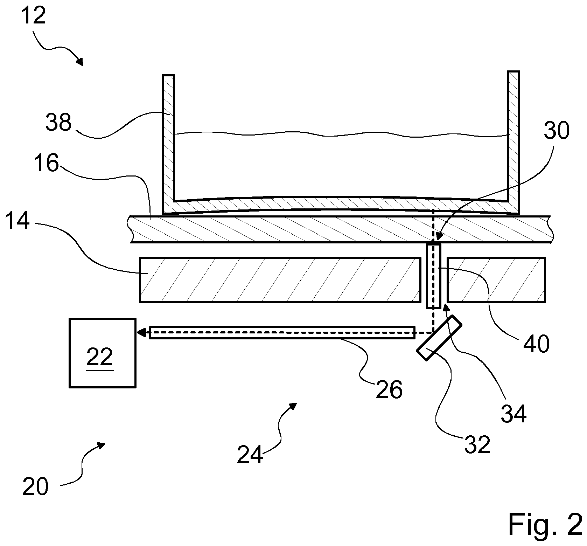

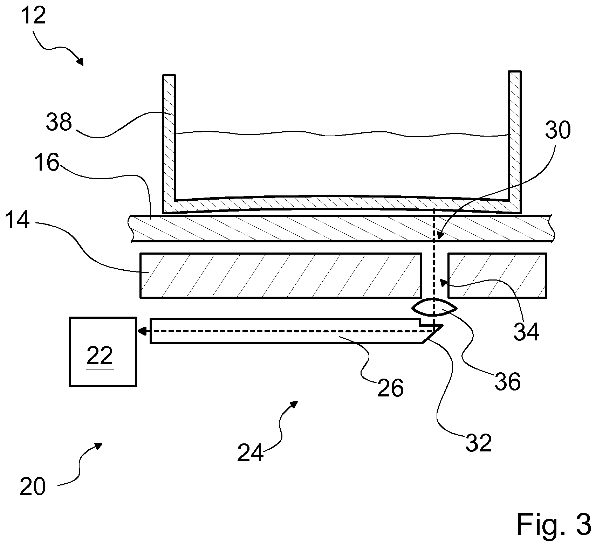

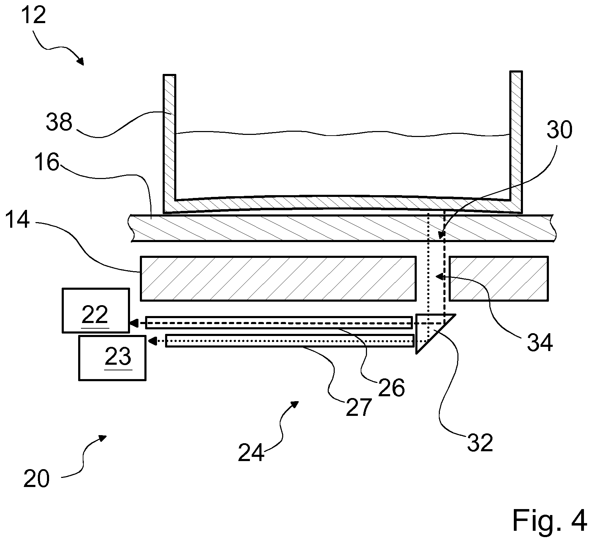

In den Figuren 3 bis 4 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 und 2, verwiesen werden kann. Zur Unterscheidung der Ausführungsbeispiele sind die Buchstaben a und b an die Bezugszeichen der Ausführungsbeispiele in den Figuren 3 und 4 angefügt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 und 2, verwiesen werden.

Figur 3 zeigt eine Hausgerätevorrichtung 12a mit einer Sensoreinheit 20a, die eine Lichtführungseinheit 24a aufweist. Die Lichtführungseinheit 24a weist eine Lichtleitfaser 26a und ein Lichtreflexionselement 32a auf. Das Lichtreflexionselement 32a ist als Totalreflexionselement ausgebildet. Das Lichtreflexionselement 32a und die Lichtleitfaser 26a sind einstückig ausgebildet. Die Lichtleitfaser 26a ist parallel zur Heizzonenbegrenzungseinheit 16a angeordnet. Ein Ende der Lichtleitfaser 26a ist an einer Unterseite, einer von der Heizzonenbegrenzungseinheit 16a abgewandten Seite, mit einem Schrägschliff von 45° und an einer Oberseite, einer der Heizzonenbegrenzungseinheit 16a zugewandten Seite, mit einem Parallelschliff versehen, so dass von einem Messpunkt 30a senkrecht von der Heizzonenbegrenzungseinheit 16a ausgesandtes Licht in die Lichtleitfaser 26a eingekoppelt wird. Zusätzlich weist die Lichtführungseinheit 24a ein Fokussierelement 36a auf. Das Fokussierelement 36a ist als Infrarotlinse ausgebildet. Das Fokussierelement 36a ist optisch zwischen dem Messpunkt 30a und dem Lichtreflexionselement 32a angeordnet, um eine hohe Strahlqualität zu erreichen. Ein zwischen der Heizzonenbegrenzungseinheit 16a und dem Lichtreflexionselement 32a angeordnetes Heizelement 14a weist eine Ausnehmung 34a auf, die einen freien Strahlenverlauf, senkrecht von der Heizzonenbegrenzungseinheit 16a vom Messpunkt 30a ausgehend, bis zum Fokussierelement 36a erlaubt.

Figur 4 zeigt eine Hausgerätevorrichtung 12b mit einer Sensoreinheit 20b, die eine Lichtführungseinheit 24b aufweist. Die Sensoreinheit 20b weist zwei Lichtsensormodule 22b, 23b auf. Die Lichtführungseinheit 24b weist zwei Lichtleitfasern 26b, 27b und ein Lichtreflexionselement 32b auf. Das Lichtreflexionselement 32b ist als Totalreflexionselement ausgebildet. Das Lichtreflexionselement 32b ist als Prisma aus Borosilikatglas gebildet. Das Lichtreflexionselement 32b ist dazu vorgesehen, Licht, das von einem Messpunkt 30b von einer Heizzonenbegrenzungseinheit 16b ausgeht, zu reflektieren und beiden Lichtleitfasern 26b, 27b zuzuführen. Die Lichtleitfasern 26b, 27b sind jeweils dazu vorgesehen, Licht von dem Lichtreflexionselement 32b zu unterschiedlichen der Lichtsensormodule 22b, 23b zu führen.

### Bezugszeichen

- 10: Hausgerät
- 12: Hausgerätevorrichtung
- 14: Heizelement
- 16: Heizzonenbegrenzungseinheit
- 20: Sensoreinheit
- 22: Lichtsensormodul
- 23: Lichtsensormodul
- 24: Lichtführungseinheit
- 26: Lichtleitfaser
- 27: Lichtleitfaser
- 30: Messpunkt
- 32: Lichtreflexionselement
- 34: Ausnehmung
- 36: Fokussierelement
- 38: Gargeschirr
- 40: Lichtleitelement

## Patentansprüche

1. Hausgerätevorrichtung, insbesondere Kochfeldvorrichtung, mit zumindest einer Sensoreinheit (20; 20a; 20b), die zumindest ein Lichtsensormodul (22; 22a; 22b, 23b) und zumindest eine Lichtführungseinheit (24a; 24b; 24c) aufweist, die zumindest eine Lichtleitfaser (26; 26a; 26b, 27b) aufweist und die dazu vorgesehen ist, Licht von einem Messpunkt (30; 30a; 30b) zu dem Lichtsensormodul (22; 22a; 22b, 23b) zu führen, **dadurch gekennzeichnet, dass** die Lichtführungseinheit (24a; 24b; 24c) zumindest ein Lichtreflexionselement (32; 32a; 32b) aufweist.

2. Hausgerätevorrichtung nach Anspruch 1, **dadurch gekennzeichnet, dass** das Lichtreflexionselement (32) zumindest eine Metallbeschichtung aufweist.

3. Hausgerätevorrichtung zumindest nach Anspruch 1, **dadurch gekennzeichnet, dass** das Lichtreflexionselement (32a; 32b) als Totalreflexionselement ausgebildet ist.

4. Hausgerätevorrichtung nach einem der vorhergehenden Ansprüche, **dadurch gekennzeichnet, dass** zumindest eine Lichtleitfaser (26; 26a; 26b, 27b) optisch zwischen dem Lichtreflexionselement (32; 32a; 32b) und dem Lichtsensor angeordnet ist.

5. Hausgerätevorrichtung nach einem der vorhergehenden Ansprüche, **dadurch gekennzeichnet, dass** die Lichtführungseinheit (24) zumindest ein Lichtleitelement (40) aufweist, das optisch zwischen dem Messpunkt (30) und dem Lichtreflexionselement (32) angeordnet ist.

6. Hausgerätevorrichtung nach einem der vorhergehenden Ansprüche, **dadurch gekennzeichnet, dass** das Lichtreflexionselement und die Lichtleitfaser (26a) einstückig ausgebildet sind.

7. Hausgerätevorrichtung nach einem der vorhergehenden Ansprüche, **dadurch gekennzeichnet, dass** die Lichtführungseinheit (24a) zumindest ein Fokussierelement (36a) aufweist.

8. Hausgerätevorrichtung nach Anspruch 7, **dadurch gekennzeichnet, dass** das Fokussierelement (36a) optisch zwischen dem Messpunkt (30a) und dem Lichtreflexionselement (32a) angeordnet ist.

9. Hausgerät, insbesondere Kochfeld, mit zumindest einer Hausgerätevorrichtung (12; 12a; 12b) nach einem der vorhergehenden Ansprüche.

## Claims

1. Domestic appliance apparatus, in particular hob apparatus, with at least one sensor unit (20; 20a; 20b), which has at least one light sensor module (22; 22a; 22b, 23b) and at least one light guiding unit (24a; 24b; 24c), which has at least one optical fibre (26; 26a; 26b, 27b) and which is provided to guide light from a measuring point (30; 30a; 30b) to the light sensor module (22; 22a; 22b, 23b), **characterised in that** the light guiding unit (24a; 24b; 24c) has at least one light reflection element (32; 32a; 32b).

2. Domestic appliance apparatus according to claim 1, **characterised in that** the light reflection element (32) has at least one metal coating.

3. Domestic appliance apparatus at least according to claim 1, **characterised in that** the light reflection element (32a; 32b) is embodied as a total reflection element.

4. Domestic appliance apparatus according to one of the preceding claims, **characterised in that** at least one optical fibre (26; 26a; 26b, 27b) is optically arranged between the light reflection element (32; 32a; 32b) and the light sensor.

5. Domestic appliance apparatus according to one of the preceding claims, **characterised in that** the light guiding unit (24) has at least one fibre-optic element (40) which is optically arranged between the measuring point (30) and the light reflection element (32).

6. Domestic appliance apparatus according to one of the preceding claims, **characterised in that** the light reflection element and the optical fibre (26a) are embodied in one piece.

7. Domestic appliance apparatus according to one of the preceding claims, **characterised in that** the light guiding unit (24a) has at least one focusing element (36a).

8. Domestic appliance apparatus according to claim 7, **characterised in that** the focusing element (36a) is optically arranged between the measuring point (30a) and the light reflection element (32a).

9. Domestic appliance, in particular hob, with at least one domestic appliance apparatus (12; 12a; 12b) according to one of the preceding claims.

## Revendications

1. Dispositif d'appareil ménager, en particulier dispositif de table de cuisson, doté d'au moins une unité de capteur (20 ; 20a ; 20b) comprenant au moins un module de capteur de lumière (22 ; 22a ; 22b, 23b) et au moins une unité de guide de lumière (24a ; 24b ; 24c) qui comprend au moins une fibre optique (26 ; 26a ; 26b, 27b) et qui est prévue pour guider la lumière d'un point de mesure (30 ; 30a ; 30b) au module de capteur de lumière (22 ; 22a ; 22b, 23b), **caractérisé en ce que** l'unité de guide de lumière (24a ; 24b ; 24c) comprend au moins un élément réfléchissant la lumière (32 ; 32a ; 32b).

2. Dispositif d'appareil ménager selon la revendication 1, **caractérisé en ce que** l'élément réfléchissant la lumière (32) présente au moins un revêtement métallique.

3. Dispositif d'appareil ménager au moins selon la revendication 1, **caractérisé en ce que** l'élément réfléchissant la lumière (32a ; 32b) est réalisé comme élément de réflexion totale.

4. Dispositif d'appareil ménager selon l'une des revendications précédentes, **caractérisé en ce qu'**au moins une fibre optique (26 ; 26a ; 26b, 27b) est située optiquement entre l'élément réfléchissant la lumière (32 ; 32a ; 32b) et le capteur de lumière.

5. Dispositif d'appareil ménager selon l'une des revendications précédentes, **caractérisé en ce que** l'unité de guide de lumière (24) comprend au moins un élément conducteur de lumière (40), situé optiquement entre le point de mesure (30) et l'élément réfléchissant la lumière (32).

6. Dispositif d'appareil ménager selon l'une des revendications précédentes, **caractérisé en ce que** ledit élément réfléchissant la lumière et la fibre optique (26a) sont formés d'une seule pièce.

7. Dispositif d'appareil ménager selon l'une des revendications précédentes, **caractérisé en ce que** l'unité de guide de lumière (24a) comporte au moins un élément de focalisation (36a).

8. Dispositif d'appareil ménager selon la revendication 7, **caractérisé en ce que** l'élément de focalisation (36a) est situé entre le point de mesure (30a) et l'élément réfléchissant la lumière (32a).

9. Appareil ménager, en particulier table de cuisson, doté d'au moins un dispositif d'appareil ménager (12, 12a, 12b) selon l'une des revendications précédentes.
